# NEUE EUROPÄISCHE PATENTSCHRIFT

(11) **EP 2 853 773 B2**
(45) Veröffentlichungstag und Bekanntmachung des Hinweises auf die Entscheidung über den Einspruch: **20.09.2023**
(45) Hinweis auf die Patenterteilung: 28.02.2018
(21) Anmeldenummer: 14181713.0
(22) Anmeldetag: 21.08.2014
(51) Int. Cl.: F16F 15/14

(54) **TORSIONSSCHWINGUNGSDÄMPFER**
TORSION VIBRATION DAMPER
AMORTISSEUR D'OSCILLATIONS DE TORSION

(30) Priorität: 27.09.2013 DE 102013219500
(43) Veröffentlichungstag der Anmeldung: 01.04.2015
(73) Patentinhaber: ZF Friedrichshafen AG, 88046 Friedrichshafen (DE)
(72) Erfinder: Hertel, Martin, 97493 Bergrheinfeld (DE)
(74) Vertreter: 2SPL Patentanwälte PartG mbB

(56) Entgegenhaltungen:
- EP-A2- 2 600 030
- WO-A1-2012/168604
- DE-A1-102011 010 342

## Beschreibung

Die vorliegende Erfindung betrifft einen Torsionsschwingungsdämpfer mit einem Tilgersystem und mit einer Dämpfungseinrichtung, wobei das Tilgersystem einen ersten Tilgermassenträger zur Aufnahme wenigstens einer ersten Tilgermasseneinheit und einen zweiten Tilgermassenträger zur Aufnahme wenigstens einer zweiter Tilgermasseneinheit aufweist, und die Dämpfungseinrichtung zumindest über einen Dämpfungseingang verfügt, der mit einer antriebsseitigen Dämpfungseinheit in Wirkverbindung steht, zwischen der und einer abtriebsseitigen Dämpfungseinheit ein Dämpfungszwischenteil wirksam ist, und die abtriebsseitige Dämpfungseinheit mit einem Dämpfungsausgang ausgebildet ist, der mit einem Abtrieb verbunden ist.

Ein derartiger Torsionsschwingungsdämpfer, der die Merkmale des Oberbegriffs des Anspruchs 1 zeigt, ist aus der DE 10 2011 010 342 A1 bekannt. Dieser Torsionsschwingungsdämpfer verfügt gemäß Fig. 5 über ein Tilgersystem mit zwei mit Axialabstand zueinander angeordneten Tilgermassenträgern, von denen jeder zur beidseitigen Aufnahme relativ bewegbarer Tilgermassen dient. Die beiden Tilgermassenträger sind mittels Distanzhaltern fest miteinander verbunden, und zusätzlich über den zu einer Dämpfungseinrichtung des Torsionsschwingungsdämpfers benachbarten Tilgermassenträger an die Dämpfungseinrichtung angebunden. Das Tilgersystem ist ebenso wie die Dämpfungseinrichtung Teil einer hydrodynamisch wirksamen Kopplungsanordnung, wobei eine Kupplungseinrichtung dieser Kopplungsanordnung mit einem Dämpfungseingang der Dämpfungseinrichtung und ein Turbinenrad des hydrodynamischen Kreises dieser Kopplungseinrichtung mit dem Dämpfungsausgang der Dämpfungseinrichtung fest verbunden ist.

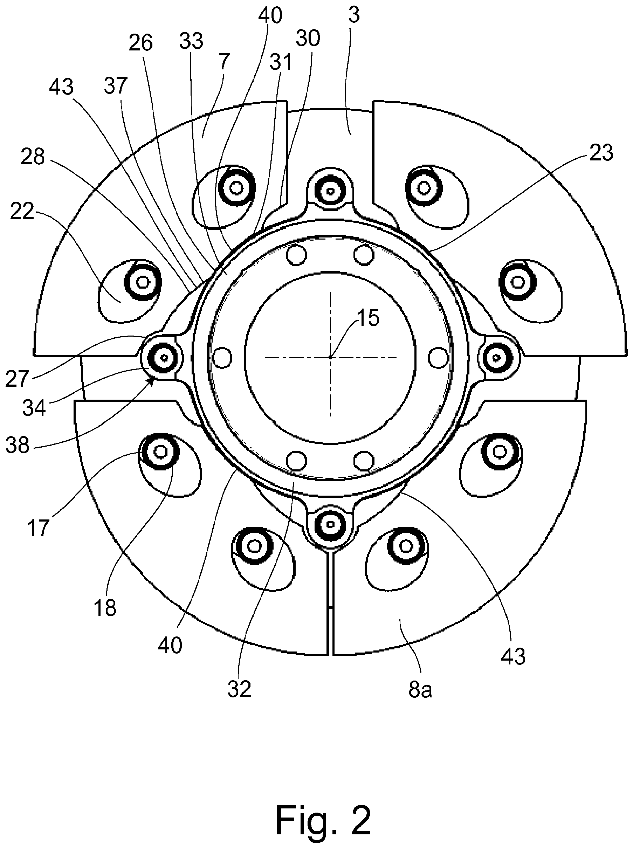

In Fig. 2 der DE 10 2011 010 342 A1 sind, allerdings in schematischer Darstellung, weitere Schaltungsmöglichkeiten von Tilgersystemen gezeigt. Während gemäß Fig. 2c zwei jeweils mit Tilgermassen ausgebildete Tilgermassenträger an einem Dämpfungsausgang einer Dämpfungseinrichtung angreifen, zeigt Fig. 2b eine Lösung, nach welcher ein erster mit Tilgermassen ausgebildete Tilgermassenträger an einem Dämpfungszwischenteil der Dämpfungseinrichtung und ein zweiter mit Tilgermassen ausgebildete Tilgermassenträger an einem Dämpfungsausgang der Dämpfungseinrichtung angreift.

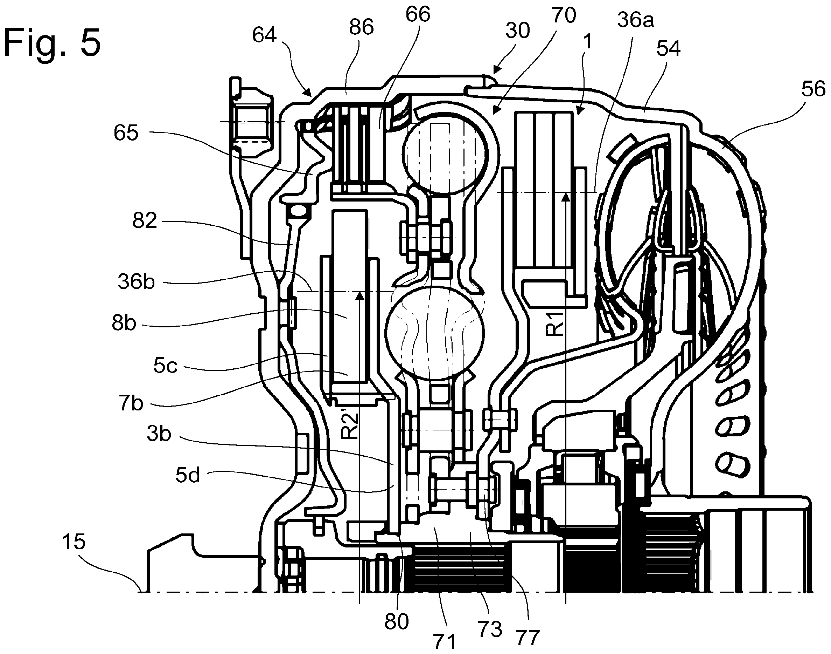

Zurückkommend auf Fig. 5 sind bei beiden Tilgermassenträgern die Tilgermassen auf jeweils gleichem Durchmesser angeordnet, und - zumindest in Radial- und in Achsrichtung - gleich dimensioniert. Da keine weitergehenden Hinweise zu den Tilgermassen gegeben sind, ist davon auszugehen, dass diese identisch sind, und somit jeweils zur Tilgung von Anregungen einer Brennkraftmaschine mit zumindest im Wesentlichen gleichen Ordnungen verwendet werden können.

Die Tilgermassen sind jeweils beidseits eines gemeinsamen Tilgermassenträgers aufgenommen. Nachteilig bei einer derartigen Lösung ist, dass Verbindungselemente, welche die Tilgermassen mit den Tilgermassenträgern verbinden, jeweils eine hohe Hertz'sche Pressung erfahren. Diese Pressung kann sich nochmals steigern, wenn es bei geringem Querschnitt des jeweiligen Tilgermassenträgers aufgrund sehr kurzer Führungslänge zu einem Verkippen der Verbindungselemente kommt, wodurch zusätzlich Kantenpressungen entstehen.

Aus der EP 2 600 030 A2 ist ein Torsionsschwingungsdämpfer mit einem Tilgersystem und einer Dämpfungseinrichtung bekannt geworden, wobei das Tilgersystem einen ersten und zweiten Tilgermasseträger zur Aufnahme jeweils einer Tilgermasse umfasst. Weiterhin ist eine Dämpfungseinrichtung angeordnet, mit zumindest einem Dämpfungseingang, dem eine Kupplungseinrichtung vorgeschaltet ist und der mit einer antriebsseitigen Dämpfungseinheit in Wirkverbindung steht. Zwischen der antriebsseitigen Dämpfungseinheit und einer abtriebsseitigen Dämpfungseinheit ist ein Dämpfungszwischenteil wirksam und die abtriebsseitige Dämpfungseinheit ist mit einem Dämpfungsausgang verbunden, der wiederum mit einem Abtrieb verbunden ist.

Durch die WO 2012/168604 A1 ist ein weiterer Torsionsschwingungsdämpfer mit einem Tilgersystem und einer Dämpfungseinrichtung bekannt. Während eine Kupplungseinrichtung der beschriebenen Kopplungsanordnung und ein Turbinenrad eines hydrodynamischen Kreises dieser Kopplungsanordnung jeweils mit dem Dämpfungseingang der Dämpfungseinrichtung verbunden sind, greift der Dämpfungsausgang der Dämpfungseinrichtung an einer als Abtrieb wirksamen Nabe an. Dämpfungseingang und Dämpfungsausgang der Dämpfungseinrichtung sind durch eine einzelne Dämpfungseinheit miteinander verbunden. Der Dämpfungseingang verfügt über mit Axialabstand zueinander angeordnete Tilgermassenträger, an welchen jeweils beidseits Tilgermassen vorgesehen sind. Diese können zur Tilgung von Anregungen einer Brennkraftmaschine mit unterschiedlichen Ordnungen oder aber zur Tilgung von Anregungen gleicher Ordnung ausgelegt sein.

Aufgrund der Anordnung der Tilgermassen am Dämpfungseingang der Dämpfungseinrichtung sind diese den auf der Antriebsseite der Dämpfungseinrichtung vorherrschenden, ungedämpften Torsionsschwingungen ausgesetzt. Dadurch müssen die Tilgermassen zum einen eine erheblich höhere Masse aufweisen, als dies auf der Abtriebsseite der Dämpfungseinrichtung der Fall wäre, und zum anderen besteht auch für das Tilgersystem das Risiko einer Schädigung oder Zerstörung, wenn es aufgrund starker Torsionsschwingungen des öfteren zu einer Auslenkung der Tilgermassen relativ zum jeweiligen Tilgermassenträger über die vorgegebene Auslenkweite hinaus kommen sollte.

Der Erfindung liegt die Aufgabe zugrunde, einen Torsionsschwingungsdämpfer mit einem Tilgersystem und mit einer Dämpfungseinrichtung derart auszubilden, dass die darin vorgesehenen Tilgermassen trotz massearmer Ausbildung Anregungen eines Antriebs, wie beispielsweise einer Brennkraftmaschine, mit unterschiedlichen Ordnungen wirksam tilgen.

Gemäß der vorliegenden Erfindung wird diese Aufgabe gelöst durch einen Torsionsschwingungsdämpfer mit einem Tilgersystem und mit einer Dämpfungseinrichtung, wobei das Tilgersystem einen ersten Tilgermassenträger zur Aufnahme wenigstens einer ersten Tilgermasseneinheit mit zumindest einer Tilgermasse und einen zweiten Tilgermassenträger zur Aufnahme wenigstens einer zweiten Tilgermasseneinheit mit zumindest einer Tilgermasse aufweist, und die Dämpfungseinrichtung zumindest über einen Dämpfungseingang verfügt, der mit einer antriebsseitigen Dämpfungseinheit in Wirkverbindung steht, zwischen der und einer abtriebsseitigen Dämpfungseinheit ein Dämpfungszwischenteil wirksam ist, und die abtriebsseitige Dämpfungseinheit mit einem Dämpfungsausgang ausgebildet ist, der mit einem Abtrieb verbunden ist.

Hierbei ist sowohl der erste Tilgermassenträger mit der wenigstens einen ersten Tilgermasseneinheit als auch der zweite Tilgermassenträger mit der wenigstens einen zweiten Tilgermasseneinheit wirkungsmäßig dem Dämpfungsausgang zugeordnet, und die Tilgermassen der zumindest zwei Tilgermasseneinheiten verfügen, bezogen auf ihren jeweiligen mittleren Erstreckungsradius bei Fahrbetrieb, über unterschiedliche Abstände gegenüber einer Zentralachse, wobei sich der Fahrbetrieb dadurch auszeichnet, dass die auf die Tilgermassen einwirkende Fliehkraft die entgegen wirkende Gewichtskraft übersteigt.

Da sich der Dämpfungsausgang bei einer Dämpfungseinrichtung abtriebsseitig und damit in Antriebsrichtung hinter demjenigen Bereich der Dämpfungseinrichtung befindet, in welchem aufgrund fehlender Dämpfung erhebliche Torsionsschwingungen anliegen, können die Tilgermassen der jeweiligen Tilgermasseneinheit massearm ausgebildet sein, und werden dennoch lediglich in geringem Maß beim Auftreten von Torsionsschwingungen in Umfangsrichtung ausgelenkt. Konsequenterweise ist bei Zuordnung des ersten Tilgermassenträgers mit der wenigstens einen ersten Tilgermasseneinheit sowie des zweiten Tilgermassenträgers mit der wenigstens einen zweiten Tilgermasseneinheit wirkungsmäßig zum Dämpfungsausgang dafür zu sorgen, dass entweder alle Dämpfungseinheiten auf Volllast ausgelegt werden, oder aber dann, wenn Dämpfungseinheiten auf Teillast ausgelegt werden sollen, zumindest eine der vorhandenen Dämpfungseinheiten auf Volllast auszulegen. Die Begründung für eine derartige Auslegung liegt darin, dass auf jeden Fall vermieden werden soll, dass die Tilgermasseneinheiten antriebsseitig wirksam werden. Dies könnte bei Auslegung sämtlicher Dämpfungseinheiten auf Teillast allerdings nicht ausgeschlossen werden, da diese Dämpfungseinheiten dann, wenn ihr Verformungsweg bei Auslegung auf Teillast verbraucht wäre, eine zumindest im Wesentlichen synchrone Bewegung des Dämpfungsausgangs mit dem Dämpfungseingang entstehen lassen würden, so dass die Tilgermasseneinheiten an der Bewegung des Dämpfungseingangs zumindest im Wesentlichen teilnehmen würden. Ein solches Vorkommnis ist ausgeschlossen, wenn stattdessen nur die antriebsseitige Dämpfungseinheit oder nur die abtriebsseitige Dämpfungseinheit auf Teillast ausgelegt ist, und die jeweils andere Dämpfungseinheit auf Volllast. Bei Auslegung der antriebsseitigen Dämpfungseinheit auf Teillast wird zwar, sobald der Verformungsweg dieser Dämpfungseinheit verbraucht ist, eine zumindest im Wesentlichen synchrone Bewegung des Dämpfungszwischenteils mit dem Dämpfungseingang erfolgen, jedoch sorgt dann die auf Volllast ausgelegte abtriebsseitige Dämpfungseinheit für eine gedämpfte Weiterleitung der am Dämpfungszwischenteil anliegenden Torsionsschwingungen an den Dämpfungsausgang. Umgekehrt wird bei Auslegung der abtriebsseitigen Dämpfungseinheit auf Teillast für den Fall, dass der Verformungsweg dieser Dämpfungseinheit verbraucht ist, zwar eine zumindest im Wesentlichen synchrone Bewegung des Dämpfungsausgangs mit dem Dämpfungszwischenteil erfolgen, jedoch sorgt dann die auf Volllast ausgelegte antriebsseitige Dämpfungseinheit für eine gedämpfte Weiterleitung der am Dämpfungseingang anliegenden Torsionsschwingungen an den Dämpfungszwischenteil, und damit an den Dämpfungsausgang.

Die Auslegung eines Teils der Dämpfungseinheiten auf Teillast kann sinnvoll sein, wenn beispielsweise zur Unterdrückung bestimmter Torsionsschwingungen eine Dämpfungseinheit geringer Steifigkeit benötigt wird. Sofern dies nicht der Fall ist, werden mit Vorzug beide Dämpfungseinheiten auf Volllast ausgelegt, so dass bis zum Erreichen des durch den jeweiligen Antrieb erreichbaren Drehmomentmaximums beide Dämpfungseinheiten zur Verfügung stehen.

Durch Anordnung der Tilgermassen zumindest zweier Tilgermasseneinheiten bei Fahrbetrieb derart, dass die Tilgermassen, bezogen auf ihren jeweiligen mittleren Erstreckungsradius, über unterschiedliche Abstände gegenüber einer Zentralachse verfügen, wird die Auslegung unterschiedlicher Tilgermasseneinheiten auf die Tilgung von Anregungen eines Antriebs, wie einer Brennkraftmaschine, mit unterschiedlichen Ordnungen begünstigt, da hierdurch - zusätzlich zur Auslegung der Masse der einzelnen Tilgermassen der jeweiligen Tilgermasseneinheit - ein zweites Auslegungskriterium für die Tilgerwirkung zur Verfügung steht, nämlich der Abstand der Tilgermassen von der Zentralachse. Es wird hierbei die Situation genutzt, dass die Tilgermassen mit zunehmendem Abstand von der Zentralachse zur Erlangung eines bestimmten Massenträgheitsmomentes eine abnehmend große Masse benötigen. Alternativ kann aber auch zusätzlich zu einem zunehmenden Abstand der Tilgermassen von der Zentralachse die Masse der Tilgermassen erhöht werden, um damit sehr hohe Massenträgheitsmomente zu erzeugen, die für die Tilgung extremer Torsionsschwingungen benötigt werden. Umgekehrt können allerdings auch bei zunehmender Annäherung der Tilgermassen an die Zentralachse hierdurch entstehende Bauraumvorteile radial außerhalb der Tilgermassen genutzt werden, beispielsweise für die Unterbringung anderer Bauteile, wie beispielsweise einer Kupplungseinrichtung, die ebenso wie der das Tilgersystem sowie die Dämpfungseinrichtung aufweisende Torsionsschwingungsdämpfer Teil einer Kopplungsanordnung ist.

Dies trifft insbesondere dann zu, wenn die Tilgermasseneinheiten an unterschiedlichen Stellen der Kopplungsanordnung vorgesehen sind. Hierbei bietet es sich insbesondere an, wenigstens einen ersten Tilgermassenträger und damit eine erste Tilgermasseneinheit axial zwischen der Dämpfungseinrichtung und einem hydrodynamischen Kreis der Kopplungsanordnung zu positionieren, und wenigstens einen zweiten Tilgermassenträger und damit eine zweite Tilgermasseneinheit axial zwischen einer Kupplungseinrichtung der Kopplungsanordnung und der Dämpfungseinrichtung.

Mit Vorzug ist hierbei zumindest ein Tilgermassenträger des Tilgersystems derart ausgebildet, dass je eine Tilgermasseneinheit axial zwischen jeweils zwei mit Axialabstand zueinander angeordneten Tilgermassen-Trägerelementen aufgenommen ist, und somit die Hertz'sche Pressung zwischen als Verbindungselemente wirksamen Rollkörpern und Tilgermassen-Trägerelementen einerseits und zwischen den Rollkörpern und Tilgermassen andererseits innerhalb eines problemfreien Belastungsbereichs verbleibt, und Kantenpressungen an den Verbindungselementen weitgehend ausgeschlossen sind.

Da zumindest zwei Tilgermassenträger mit Tilgermasseneinheiten vorhanden sind, können die Tilgermassen der Tilgermasseneinheiten zur Tilgung von Anregungen eines Antriebs, wie einer Brennkraftmaschine, mit zumindest im Wesentlichen gleichen Ordnungen oder aber zur Tilgung von Anregungen unterschiedlicher Ordnungen vorgesehen sein. Sind diese Tilgermasseneinheiten zur Tilgung von Anregungen mit im Wesentlichen gleichen Ordnungen vorgesehen, dann sind die in den Tilgermassenträgern vorgesehenen Führungsbahnen zumindest im Wesentlichen gleich ausgebildet. Sollen dagegen die Tilgermasseneinheiten zur Tilgung von Anregungen mit unterschiedlichen Ordnungen vorgesehen sein, dann sind die in den Tilgermassenträgern vorgesehenen Führungsbahnen unterschiedlich ausgebildet, sofern für die unterschiedlichen Führungsbahnen aus Kostengründen jeweils gleiche Rollkörper Verwendung finden. Zur Tilgung von Anregungen unterschiedlicher Ordnungen ist beispielsweise eine der beteiligten Tilgermasseneinheiten für Anregungen der 2. Ordnung vorgesehen, eine andere der beteiligten Tilgermasseneinheiten dagegen für Anregungen der 1. Ordnung. Dies ist dann vorteilhaft, wenn die dem Tilgersystem vorgeschaltete Brennkraftmaschine als 4-Zylinder-Maschine ausgebildet ist, bei welcher eine Zylinderabschaltung zu einem Betrieb mit lediglich noch 2 Zylindern führt. Im 4-Zylinderbetrieb ist die Tilgung von Anregungen der 2. Ordnung vorzunehmen, im 2-Zylinderbetrieb dagegen die Tilgung von Anregungen der 1. Ordnung. Vergleichbar verhält es sich bei Zylinderabschaltungen von 6-Zylindermaschinen auf 3 Zylinder oder bei Zylinderabschaltungen von 8-Zylindermaschinen auf 4 Zylinder. Im erstgenannten Fall werden alternativ zu Anregungen der 3. Ordnung die Anregungen der 1,5. Ordnung getilgt, und im letztgenannten Fall alternativ zu Anregungen der 4. Ordnung die Anregungen der 2. Ordnung.

Die Erfindung wird nachfolgend anhand der beiliegenden Figuren detailliert beschrieben. Es zeigt:
Fig. 1 eine Draufsicht auf ein Tilgersystem mit Tilgermassen, die in einer Position dargestellt sind, die sie bei Fahrbetrieb mit die Gewichtskraft übersteigender Fliehkraft und frei von eingeleiteten Torsionsschwingungen einnehmen;
Fig. 2 wie Fig. 1, aber mit den Tilgermassen in einer Position, die bei unter die Gewichtskraft abgesunkener Fliehkraft eingenommen wird;
Fig. 3 eine Schnittdarstellung durch eine Kopplungsanordnung mit einer Kupplungseinrichtung, einem über Tilgersystem und Dämpfungseinrichtung verfügenden Torsionsschwingungsdämpfer und hydrodynamischem Kreis, mit Anbindung eines ersten Tilgermassenträgers mit einer ersten Tilgermasseneinheit sowie eines zweiten Tilgermassenträgers mit einer zweiten Tilgermasseneinheit an einem Abtrieb der Dämpfungseinrichtung;
Fig. 4 einen Ausschnitt mit Darstellung der zweiten Tilgermasseneinheit mit konstruktiven Änderungen;
Fig. 5 wie Fig. 3, aber mit Anbindung des zweiten Tilgermassenträgers an den Dämpfungszwischenteil der Dämpfungseinrichtung radial weiter entfernt von einer Zentralachse der Kopplungsanordnung;
Fig. 6 wie Fig. 3, aber mit konstruktiv anderer Ausbildung durch Anordnung der beiden Tilgermassenträger axial benachbart zueinander.

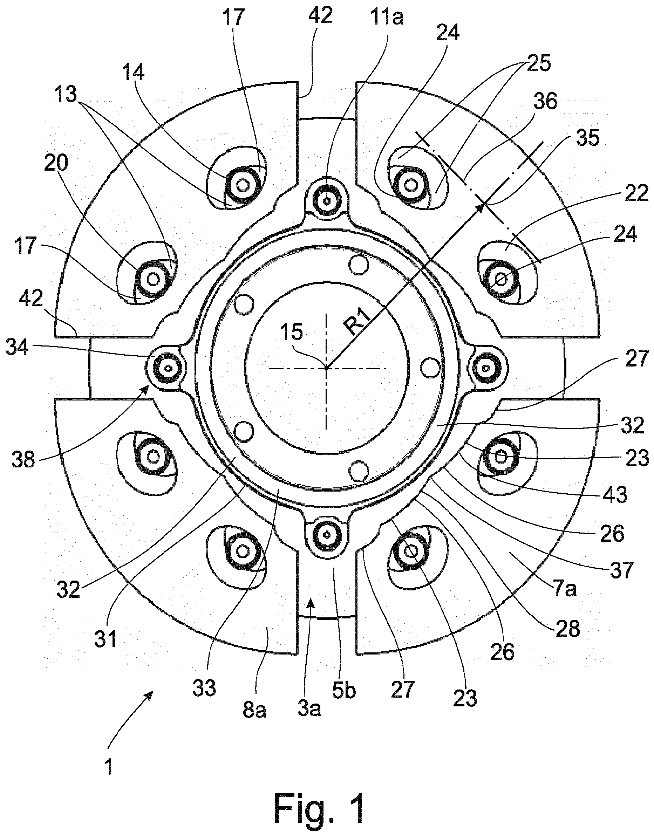

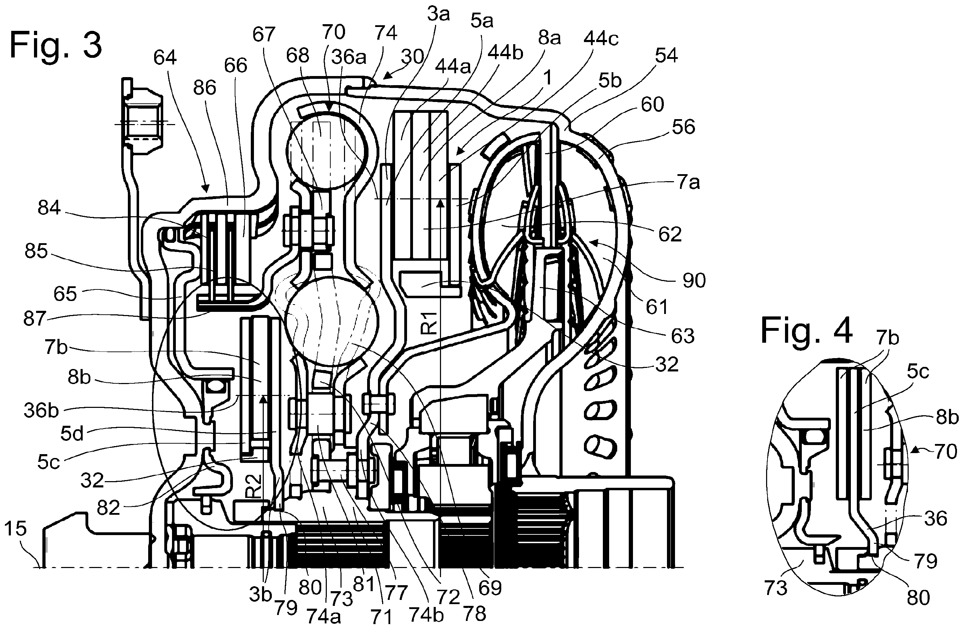

In Fig. 1 ist ein Tilgersystem 1 mit einem Tilgermassenträger 3a dargestellt, der, wie in Fig. 3 veranschaulicht, zwei mit Axialabstand zueinander angeordnete Tilgermassen-Trägerelemente 5a und 5b aufweist. In Fig. 1 und 2 ist das Wirkprinzip des Tilgersystems 1 anhand von Tilgermasseneinheiten 8a mit jeweils zumindest einer Tilgermasse 7a dargestellt, wobei diese Tilgermasseneinheiten 8a sich, wie Fig. 3 weiterhin zeigt, axial zwischen den beiden Tilgermassen-Trägerelementen 5a und 5b befinden. Es sei allerdings bereits jetzt darauf hingewiesen, dass das gleiche Wirkprinzip auch für einen zweiten Tilgermassenträger 3b mit zweiten Tilgermasseneinheiten 8b mit zumindest einer Tilgermasse 7b zutrifft, der in Fig. 3 axial zwischen den beiden Tilgermassen-Trägerelementen 5c und 5d vorgesehen ist. Obwohl somit lediglich eine Beschreibung zu den Tilgermassen 7a der Tilgermasseneinheiten 8a folgt, gelten die Ausführungen selbstverständlich auch für die Tilgermassen 7b der Tilgermasseneinheiten 8b. Entsprechendes gilt auch für Abstandsstücke, die in Fig. 3 axial zwischen den beiden Tilgermassen-Trägerelementen 5a und 5b sowie 5c und 5d vorgesehen, zeichnerisch aber nicht dargestellt sind, und die funktional den in Fig. 1 und 2 behandelten Abstandsstücken 11a entsprechen. Die Abstandsstücke dienen, wie nachfolgend noch ausführlich erläutert wird, jeweils zur Aufnahme eines ringförmigen Bauteils 32. Es bleibt nachzutragen, dass, wie Fig. 3 ferner vermittelt, die Tilgermassen 7a in Achsrichtung eine Mehrzahl von Tilgermassenelementen 44a bis 44c aufweisen, während die Tilgermassen 7b in Achsrichtung einstückig ausgebildet sind.

Zur besseren Darstellbarkeit der am Tilgermassenträger 3a aufgenommenen Tilgermassen 7a ist in den Fig. 1 und 2 jeweils das in Blickrichtung axial vor den Tilgermassen 7a angeordnete Tilgermassen-Trägerelement 5a entfernt, und lediglich das in Blickrichtung axial hinter den Tilgermassen 7a angeordnete Tilgermassen-Trägerelement 5b abgebildet. Wie bereits erwähnt, ist das Tilgermassen-Trägerelement 5b durch Abstandsstücke 11a mit dem Tilgermassen-Trägerelement 5a verbunden. Die in Fig. 1 und 2 gezeigten Tilgermassen 7a verfügen über jeweils paarweise ausgebildete Führungsbahnen 22 zur Aufnahme von Rollkörpern 20, wobei die Führungsbahnen 22 derart ausgelegt sind, dass sie eine radiale Relativbewegung der Tilgermassen 7a gegenüber den Rollkörpern 20 ermöglichen. Die Tilgermassen 7a weisen, radial innen an ihre Umfangsseiten 42 angrenzend, Anschlagseiten 43 auf.

An den Tilgermassen-Trägerelementen 5a und 5b sind, ebenfalls jeweils paarweise, Führungsbahnen 13 vorgesehen, die über einen gekrümmten Verlauf verfügen. Gemäß Darstellung in Fig. 1 oder 2 verfügen die Führungsbahnen 13 über je einen Ausgangsbereich 14, in welchem die jeweilige Führungsbahn 13 den größten Radialabstand von einer Zentralachse 15 aufweist, und über Anschlussbereiche 17, die sich, einander umfangsmäßig entgegengesetzt erstreckend, an beide Seiten des Ausgangsbereiches 14 anschließen. Auch die an den Tilgermassen 7a, 7b vorgesehenen Führungsbahnen 22 verfügen über einen gekrümmten Verlauf, mit je einem Ausgangsbereich 24, in welchem die jeweilige Führungsbahn 22 den geringsten Radialabstand von der Zentralachse 15 aufweist, und mit Anschlussbereichen 25, die sich, einander umfangsmäßig entgegengesetzt erstreckend, an beide Seiten des Ausgangsbereiches 24 anschließen. Die Führungsbahnen 22 sind jeweils beidseits eines Tilgermassenzentrums 35 der jeweiligen Tilgermasse vorgesehen. Dieses Tilgermassenzentrum 35 befindet sich in eines mittleren Erstreckungsradius 36 der Tilgermassen 7a, der bei Fahrbetrieb in einem Abstand R1 gegenüber der Zentralachse 15 angeordnet ist. Der Zustand der Tilgermassen 7a bei Fahrbetrieb ist in Fig. 1 gezeigt, und liegt dann vor, wenn das Tilgersystem 1 mit einer Drehzahl betrieben wird, bei welcher die Fliehkraft die Gewichtskraft übersteigt.

Die in den Führungsbahnen 13 und 22 aufgenommenen Rollkörper 20 greifen jeweils beidseits der jeweiligen Führungsbahn 22 in die dort vorgesehenen Führungsbahnen13 ein. In der Darstellung gemäß Fig. 1 streben die Tilgermassen 7a, bedingt durch die Fliehkraft, nach radial außen, so dass sich die Rollkörper 20 jeweils im Ausgangsbereich 24 der jeweiligen Führungsbahn 22 positionieren, also in demjenigen Bereich, der über den geringsten Radialabstand zur Zentralachse 15 verfügt. Die Rollkörper 20 stützen sich hierbei jeweils im Ausgangsbereich 14 der Tilgermassen-Trägerelemente 5a und 5b ab, also in demjenigen Bereich, der über den größten Radialabstand zur Zentralachse 15 verfügt.

Die Tilgermassen 7a weisen jeweils an ihren radial inneren Enden jeweils eine geometrische Anformung 28 auf, die im umfangsseitig mittleren Teil über einen ersten Kontaktbereich 26 verfügt, in den umfangsseitig äußeren Teilen dagegen über zweite Kontaktbereiche 27. Der erste Kontaktbereich 26 verfügt über eine Bereichsmitte 37, welche den ersten Kontaktbereich 29 in Anformunghälften 23 unterteilt. Diese geometrische Anformung 28 wirkt in nachfolgend noch zu beschreibender Weise mit radial innerhalb der Tilgermassen 7a vorgesehenen Anschlägen 31 zusammen, die an einem ringförmigen Bauteil 32 zusammen gefasst sind.

Das ringförmige Bauteil 32 verfügt in Umfangsrichtung zwischen je zwei Tilgermassen 7a über je eine Halterung 34, die jeweils ein Abstandsstück 11a umschließt, so dass die Halterung 34 jeweils als Anschlagaufnehmer 38 dient. Das ringförmige Bauteil 32 ist demnach drehfest an dem Tilgermassen-Trägerelement 5b und damit am Tilgermassenträger 3 aufgenommen. Ein sich in Umfangsrichtung erstreckender Ringkörper 33 wirkt zwischen je zwei Anschlagaufnehmern 38 jeweils mit einem Anschlagprofil 40. Anschlagaufnehmer 38 und Anschlagprofile 40 bilden gemeinsam Anschläge 31 an dem ringförmigen Bauteil 32.

Wenn das Tilgersystem 1 mit einer Drehzahl betrieben wird, bei welcher die Fliehkraft die Gewichtskraft übersteigt, streben die Tilgermassen 7a unter der Wirkung der Fliehkraft nach radial außen, so dass sich die Rollkörper 20 jeweils im Ausgangsbereich 24 der jeweiligen Führungsbahn 22 der Tilgermassen 7a positionieren können. Torsionsschwingungen können zwar Auslenkungen der Tilgermassen 7a in Umfangsrichtung erzwingen, wodurch die Rollkörper 20 aus den Ausgangsbereichen 14, 24 der Führungsbahnen 13, 22 in deren Anschlussbereiche 17, 25 ausgelenkt werden, jedoch erfolgt bei abklingender Torsionsschwingung stets eine Rückstellung der Rollkörper 20 in die Ausgangsposition unter der Wirkung der Fliehkraft.

Fällt die Fliehkraft dagegen unter die Gewichtskraft, beispielsweise bei einem Kriechbetrieb eines Kraftfahrzeuges oder beim Abstellen eines Antriebs, wie beispielsweise einer Brennkraftmaschine, dann fallen die Tilgermassen 7a nach radial innen, um die in Fig. 2 gezeigte Relativposition zueinander und zum Tilgermassenträger 3 einzunehmen. Bei einem solchen Betriebszustand fallen die beiden sich radial oberhalb der Zentralachse 15 befindlichen Tilgermassen 7a nach radial innen, bis ihre Anschlagseiten 43 mit der für die Bewegungsrichtung relevanten Anformungshälfte 23 des ersten Kontaktbereichs 26 in Anlage an dem zugeordneten Anschlagprofil 40 des Anschlags 31 am Ringkörper 33 des ringförmigen Bauteils 32 gekommen sind. Sollten die Führungsbahnen 13, 22 eine weitere Bewegung der Tilgermassen 7 nach radial unten zulassen, wird diese Bewegung erst dann enden, wenn der für die Bewegungsrichtung relevante zweite Umfangsbereich 27 der jeweiligen Tilgermasse 7a an der Halterung 34 und damit am Anschlagaufnehmer 38 des ringförmigen Bauteils 32 in Anlage gelangt ist. Die beiden sich radial unterhalb der Zentralachse 15 befindlichen Tilgermassen 7a fallen ebenfalls nach radial innen, bis ihre Anschlagseiten 43 mit den daran angeformten, für die Bewegungsrichtung relevanten ersten Kontaktbereichen 26 in Anlage an dem zugeordneten Anschlagprofil 40 des Anschlags 31 am Ringkörper 33 des ringförmigen Bauteils 32 gekommen sind, und bis zudem die für die Bewegungsrichtung relevanten zweiten Kontaktbereiche 27 der jeweiligen Tilgermassen 7a an den entsprechenden Halterungen 34 und damit an den Anschlagaufnehmern 38 des ringförmigen Bauteils 32 in Anlage gelangt sind. Auf diese Weise wird verhindert, dass die beiden sich radial unterhalb der Zentralachse 15 befindlichen Tilgermassen 7a mit ihren Umfangsseiten 42 in Anlage aneinander gelangen.

Wie Fig. 3 im Einzelnen zeigt, ist für die Tilgermassen 7a am ersten Tilgermassenträger 3a vorgesehen, diese axial zwischen zwei Tilgermassen-Trägerelementen 5a und 5b aufzunehmen, und für die Tilgermassen 7b am zweiten Tilgermassenträger 3b, diese axial zwischen zwei Tilgermassen-Trägerelementen 5c und 5d aufzunehmen. Weiterhin ist aus Fig. 3 erkennbar, dass die Tilgermassen 7a des ersten Tilgermassenträgers 3a bei Fahrbetrieb über einen mittleren Erstreckungsradius 36a verfügen, die Tilgermassen 7b des zweiten Tilgermassenträgers 3a dagegen bei Fahrbetrieb über einen mittleren Erstreckungsradius 36b. Hierbei ist der Abstand R1 des mittleren Erstreckungsradius 36a der Tilgermassen 7a gegenüber der Zentralachse 15 deutlich größer als der Abstand R2 des mittleren Erstreckungsradius 36b der Tilgermassen 7b gegenüber der Zentralachse 15. Die Tilgermassen 7a erbringen somit - Massengleichheit mit den Tilgermassen 7b vorausgesetzt, ein deutlich höheres Massenträgheitsmoment als die Tilgermassen 7a. Dafür ist der Tilgermassenträger 3b radial sehr kompakt ausgebildet, so dass er gemeinsam mit der Tilgermasseneinheit 8b den freien Raumbereich radial innerhalb einer Kupplungseinrichtung 64 einer Kopplungsanordnung 56 vorteilhaft zu nutzen vermag. Bei beiden Tilgermasseneinheiten 8a und 8b ist, jeweils radial innerhalb der Tilgermassen 7a, 7b, das ringförmige Bauteil 32 vorgesehen, dessen Funktion in Zusammenhang mit den Fig. 2 und 3 bereits ausführlich behandelt worden ist. Aufgrund der zuvor behandelten Unterschiede sind die an den beiden Tilgermassenträgern 3a, 3b vorgesehenen Tilgermasseneinheiten 8a, 8b bevorzugt zur Tilgung von Anregungen eines Antriebs, wie einer Brennkraftmaschine, mit unterschiedlichen Ordnungen geeignet, jedoch kann die mit geringerer Massenträgheit aufwartende zweite Tilgermasseneinheit 8b auch dazu dienen, die erste Tilgermasseneinheit 8a bei der Tilgung von Anregungen einer bestimmten Ordnung zu unterstützen, so dass die zweite Tilgermasseneinheit 8b zumindest im Wesentlichen auf Anregungen der gleichen Ordnung wie die erste Tilgermasseneinheit 8a abgestimmt ist.

Wenn durch beide Tilgermasseneinheiten 8a und 8b zumindest im Wesentlichen Anregungen der gleichen Ordnung zu tilgen ist, sind die Führungsbahnen 13 bei den Tilgermassen 7a und 7b beider Tilgermasseneinheiten 8a und 8b zumindest im Wesentlichen gleich ausgebildet. Sollen dagegen Anregungen unterschiedlicher Ordnungen getilgt werden, dann unterscheiden sich die Führungsbahnen voneinander, sofern für beide Führungsbahnen aus Kostengründen jeweils gleiche Rollkörper 20 Verwendung finden sollen. Beispielsweise kann die erste Tilgermasseneinheit 8a zur Tilgung von Anregungen der 2. Ordnung vorgesehen sein, die zweite Tilgermasseneinheit 8b dagegen zur Tilgung von Anregungen der 1. Ordnung. Dies ist dann vorteilhaft, wenn die dem Tilgersystem 1 vorgeschaltete Brennkraftmaschine als 4-Zylinder-Maschine ausgebildet ist, bei welcher eine Zylinderabschaltung zu einem Betrieb mit lediglich noch 2 Zylindern führt. Im 4-Zylinderbetrieb ist die Tilgung von Anregungen der 2. Ordnung vorzunehmen, im 2-Zylinderbetrieb dagegen die Tilgung von Anregungen der 1. Ordnung. Vergleichbar verhält es sich bei Zylinderabschaltungen von 6-Zylindermaschinen auf 3 Zylinder oder bei Zylinderabschaltungen von 8-Zylindermaschinen auf 4 Zylinder. Im erstgenannten Fall werden alternativ zu Anregungen der 3. Ordnung die Anregungen der 1,5. Ordnung getilgt, und im letztgenannten Fall alternativ zu Anregungen der 4. Ordnung die Anregungen der 2. Ordnung.

Die zur Aufnahme der beiden Tilgermassenträger 3a und 3b mit deren Tilgermasseneinheiten 8a und 8b dienende Kopplungsanordnung 56 verfügt über ein Gehäuse 54 und weist, da als hydrodynamischer Drehmomentwandler 90 ausgebildet, einen hydrodynamischen Kreis 60 mit Pumpenrad 61, Turbinenrad 62 und Leitrad 63 auf. Die bereits genannte Kupplungseinrichtung 64 ist mit einem Kupplungskolben 65 sowie mit einer Reibscheibenkupplung 66 ausgebildet, wobei radial äußere Reibscheibenelemente 84 der Reibscheibenkupplung 66 in Verzahnungseingriff mit einer Außenwandung 86 des Gehäuses 54 und radial innere Reibscheibenelemente 85 der Reibscheibenkupplung 66 in Verzahnungseingriff mit einem Reibscheiben-Elemententräger 87 stehen, der an einem Dämpfungseingang 67 einer Dämpfungseinrichtung 70 angreift.. In Abhängigkeit von der Ansteuerung des auf einem Kolbenträger 82 axial verlagerbar angeordneten Kupplungskolbens 65 ist die Kupplungseinrichtung 64 zwischen einer Einrückposition und einer Ausrückposition bewegbar. Der Dämpfungseingang 67 ist über eine erste Dämpfungseinheit 68 mit einem Dämpfungszwischenteil 74 verbunden, das zwei mit Axialabstand zueinander angeordnete und mittels Abstandselementen 81 auf fester axialer Distanz gehaltene Bauteile 74a und 74b aufweist. Über eine zweite Dämpfungseinheit 69 ist das Dämpfungszwischenteil 74 mit einem Dämpfungsausgang 72 verbunden, der mit einer als Abtrieb 73 wirksamen Nabe 71 zusammen wirkt. Die Dämpfungseinrichtung 70 dient gemeinsam mit dem Tilgersystem 1 als Torsionsschwingungsdämpfer 30.

Wie Fig. 3 im Einzelnen zeigt, weist das Tilgermassen-Trägerelement 5a des ersten Tilgermassenträgers 3a eine nach radial innen greifende Radialverlängerung 78 auf, um mittels einer als Vernietung ausgebildeten Verbindung 77 an die Nabe 71 und daher an den Abtrieb 73 angebunden zu werden. Da die Radialverlängerung 78 zusätzlich zur Aufnahme des Turbinenrades 62 dient, ist auch dieses letztendlich mit dem Abtrieb 73 verbunden. Auch der zweite Tilgermassenträger 3b ist mit dem Abtrieb 73 verbunden, und zwar mittels einer am Tilgermassen-Trägerelement 5d vorgesehenen und in Richtung zur Dämpfungseinrichtung 70 ausgreifenden Axialausdrückung 79. Die letztgenannte Verbindung 80 wird mittels einer Verschweißung hergestellt.

Da beide Tilgermassenträger 3a und 3b des Tilgersystems 1 jeweils am Abtrieb 73 der Dämpfungseinrichtung 70 angreifen, wird vermieden, einen Tilgermassenträger in Richtung des Momentenübertragungsweges vor der antriebsseitigen Dämpfungseinheit 68 anzuordnen. Der Grund hierfür liegt darin begründet, dass vor der antriebsseitigen Dämpfungseinheit 68 aufgrund fehlender Dämpfung erhebliche Torsionsschwingungen anliegen können. Dagegen wirken bei Zuordnung der Tilgermassenträger 3a und 3b zum Abtrieb 73 die Dämpfungseinheiten 68 und 69 schwingungsreduzierend. Folgerichtig können daher für beide Tilgermassenträger 3a, 3b die jeweils zugeordneten Tilgermassen 7a, 7b massearm ausgebildet sein, und werden dennoch lediglich in geringem Maß beim Auftreten von Torsionsschwingungen in Umfangsrichtung ausgelenkt. Zur Ausführung der Tilgermassen 7a, 7b ist folgendes zu ergänzen:

Wie bereits erwähnt, weisen die Tilgermassen 7a in Achsrichtung eine Mehrzahl von Tilgermassenelementen 44a bis 44c auf, während die Tilgermassen 7b in Achsrichtung einstückig ausgebildet sind. Bei den Tilgermassenelementen 44a bis 44c handelt es sich um Blechelemente, bei denen die Führungsbahnen 13a bei geringen Kosten jeweils über die gesamte Bahntiefe gehärtet werden können. Anschließend werden die Tilgermassenelemente 44a bis 44c entweder, nach Vernietung miteinander, auf die Rollkörper 20 gesetzt, oder aber die Tilgermassenelemente 44a bis 44c werden vernietungsfrei auf die Rollkörper 20gesetzt. Die in Achsrichtung einstückigen Tilgermassen 7b bestehen dagegen mit Vorzug aus massivem Stahl, und werden beispielsweise zum Erhalt der hierfür bestimmten Form gefräst. Dadurch können die Toleranzen an den Führungsbahnen der entsprechenden Tilgermassen-Trägerelemente eingegrenzt und dadurch die Leistungsfähigkeit der jeweiligen Tilgermasseneinheit 8b erhöht werden. Ebenso können aber auch die Tilgermassen 7a der ersten Tilgermasseneinheit 8a in Achsrichtung einstückig und die Tilgermassen 7b der zweiten Tilgermasseneinheit 8b axial mit einer Mehrzahl von Tilgermassenelementen 44a bis 44c ausgebildet sein. Weitere Kombinationen sind ebenfalls möglich, wie die Ausbildung beider Tilgermassen 7a, 7b auf gleiche Weise, also entweder beide jeweils mit einer Mehrzahl von Tilgermassenelementen, oder beide jeweils in Achsrichtung einstückig.

Trotz dieser vorteilhaften Ausgestaltung sind Vorkehrungen zu treffen, um zu vermeiden, dass den Tilgermassen 7a, 7b eine dem Dämpfungseingang 67 der Dämpfungseinrichtung 70 entsprechende Bewegung aufgezwungen wird. Diese Vorkehrungen werden durch entsprechende Auslegung der Dämpfungseinheiten 68 und 69 getroffen. Entweder werden beide Dämpfungseinheiten 68 und 69 auf Volllast ausgelegt, so dass vermieden wird, dass diese innerhalb des von einem Antrieb, wie einer Brennkraftmaschine, gelieferten Drehmomentbereichs an einen Endanschlag laufen, oder aber es wird, wenn eine der Dämpfungseinheiten 68, 69 auf Teillast ausgelegt werden soll, dafür gesorgt, dass auf jeden Fall die andere Dämpfungseinheit 68, 69 auf Volllast ausgelegt ist. Bei Auslegung einer der Dämpfungseinheiten 68, 69 auf Teillast wird nämlich zugelassen, dass diese Dämpfungseinheit innerhalb des vom Antrieb gelieferten Drehmomentbereichs einen Endanschlag erreicht, so dass, sobald der Endanschlag erreicht ist, das jeweils abtriebsseitig der Dämpfungseinheit 68, 69 vorgesehene Bauteil eine bewegungsgleiche Mitnahme mit dem jeweils antriebsseitig der Dämpfungseinheit vorgesehenen Bauteil erfährt. Im Fall der Dämpfungseinheit 68 wird demnach das Dämpfungszwischenteil 74 mit dem Dämpfungseingang 67 bewegt, im Fall der Dämpfungseinheit 69 dagegen der Abtrieb 73 mit dem Dämpfungszwischenteil 74. Wegen der Auslegung der jeweils anderen Dämpfungseinheit 68 oder 69 auf Volllast wird aber auch dann noch eine Dämpfung für die Tilgermassen 7a, 7b beider Tilgermassenträger 3a, 3b vorliegen.

Die Auslegung einer der Dämpfungseinheiten 68 oder 69 auf Teillast kann beispielsweise dann vorteilhaft sein, wenn zur Unterdrückung bestimmter Torsionsschwingungen eine Dämpfungseinheit geringer Steifigkeit benötigt wird. Sofern dies nicht der Fall ist, werden beide Dämpfungseinheiten 68, 69 auf Volllast ausgelegt, so dass innerhalb des durch den jeweiligen Antrieb erreichbaren Drehmomentbereiches beide Dämpfungseinheiten 68 und 69 zur Verfügung stehen.

Nachfolgend sind weitere Ausführungen des Torsionsschwingungsdämpfers 30 behandelt, so dass lediglich diejenigen Merkmale beschrieben sind, welche eine Abweichung gegenüber der in Fig. 3 beschriebenen Ausführung bedingen.

Auch bei der Ausführung gemäß Fig. 4 ist der zweite Tilgermassenträger 3b des Tilgersystems 1 mit dem Abtrieb 73 der Dämpfungseinrichtung 70 des Torsionsschwinungungsdämpfers 30 verbunden, jedoch verfügt der Tilgermassenträger 3b lediglich über ein einzelnes Tilgermassen-Trägerelement 5c, das zur Herstellung der Verbindung 80 mit dem Abtrieb 73 mit einer in Richtung zur Dämpfungseinrichtung 70 ausgreifenden Axialausdrückung 79 versehen ist. Beidseits des einzelnen Tilgermassen-Trägerelementes 5c sind Tilgermassen 7b angeordnet, die zur Bildung der zweiten Tilgermasseneinheit 8b dienen. Aufgrund der Einsparung eines Tilgermassen-Trägerelementes gegenüber der in Fig. 3 gezeigten Ausführung wird Bauraum geschaffen, der durch zusätzliche Tilgermassen 7b der zweiten Tilgermasseneinheit 8b aufgefüllt werden kann. Damit kann die Leistungsfähigkeit der zweiten Tilgermasseneinheit 8b gegenüber der in Fig. 3 gezeigten Ausführung ohne Bauraumnachteile gesteigert werden.

Bei der Ausführung nach Fig. 5 ist gegenüber der in Fig. 3 gezeigten Ausführung die Tilgermasseneinheit 8b des zweiten Tilgermassenträgers 3b des Tilgersystems 1 mit einem mittleren Erstreckungsradius 36b ausgebildet, der sich in radial größerem Abstand R2' gegenüber der Zentralachse 15 befindet. Hierzu ist das zur Dämpfungseinrichtung 70 benachbarte Tilgermassen-Trägerelement 5d des Tilgermassenträgers 3b nach radial innen bis an die Nabe 71 des Abtriebs 73 der Dämpfungseinrichtung 70 des Torsionsschwinungungsdämpfers 30 herangeführt, und findet dort die Verbindung 80. Alternativ oder ergänzend können auch die Tilgermassen 7b der zweiten Tilgermasseneinheit 8b radial vergrößert werden, so dass ein gegenüber der Ausführung nach Fig. 3 wesentlich höheres Massenträgheitsmoment durch die zweite Tilgermasseneinheit 8b erzeugt werden kann. Auf jeden Fall weicht der mittlere Erstreckungsradius 36b der Tilgermasseneinheit 8b vom vergleichbaren Erstreckungsradius der Fig.3 ab, und damit auch der Abstand R2' dieses Erstreckungsradius 36b gegenüber der Zenralachse 15.

Diese Ausführung des zweiten Tilgermassenträgers 3b mit der zweiten Tilgermasseneinheit 8b ist möglich, da die Außenwandung 86 des Gehäuses 54 der Kopplungsanordnung 56 gegenüber der Ausführung nach Fig. 3 im axialen Erstreckungsbereich der Reibscheibenkupplung 66 der Kupplungseinrichtung 64 eine radiale Aufweitung erfahren hat, wodurch sowohl die Reibscheibenkupplung 66 als auch der Kupplungskolben 65 nach radial außen verlagert werden konnten, und damit den zusätzlichen Bauraum für den zweiten Tilgermassenträger 3b mit der zweiten Tilgermasseneinheit 8b frei geben. Hierdurch wurde es notwendig, den am Gehäuse 54 zur Dämpfungseinrichtung 70 hin gewandten Kolbenträger 82 nach radial außen zu verlängern, so dass auch der Kupplungskolben 65 radial weiter außen axial bewegbar aufgenommen ist. Da der Kupplungskolben 65 bei weiterhin starker Konturierung eine geringe radiale Ausdehnung aufweist, ist bei diesem, ein gleichbleibendes übertragbares Drehmoment vorausgesetzt, eine lastabhängige Durchbiegung minimiert.

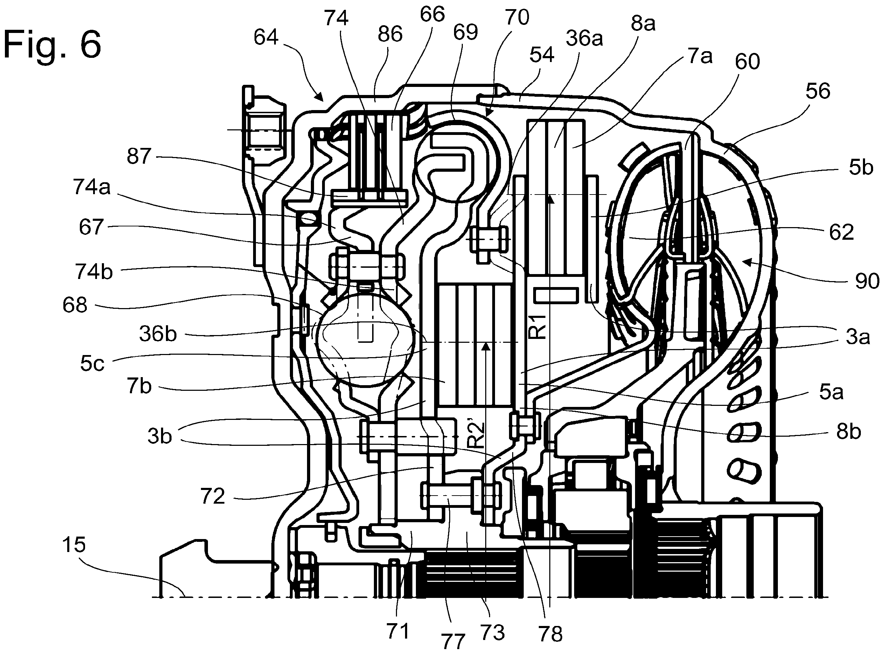

Ebenso wie bei Fig. 5 hat auch bei Fig. 6 die Außenwandung 86 des Gehäuses 54 der Kopplungsanordnung 56 im axialen Erstreckungsbereich Bereich der Reibscheibenkupplung 66 der Kupplungseinrichtung 64 eine radiale Aufweitung erfahren, um zusätzlichen Bauraum zu schaffen. Innerhalb des axialen Erstreckungsbereichs des radial innere Reibscheiben-Elemententrägers 87, aber von diesem radial umgriffen, ist der Dämpfungseingang 67 der Dämpfungseinrichtung 70 vorgesehen, der über die antriebsseitige Dämpfungseinheit 68 mit den Bauteilen 74a und 74b des Dämpfungszwischenteils 74 verbunden ist. Eines dieser Bauteile 74a, 74b, nämlich das dem hydrodynamischen Kreis 60 zugewandte Bauteil 74b, dient zur Ansteuerung der abtriebsseitigen Dämpfungseinheit 69, die sich anderenends am Dämpfungsausgang 72 abstützt, und dadurch mit der Nabe 71 des Abtriebs 73 in Wirkverbindung steht. Der Dämpfungsausgang 72 dient als Tilgermassen-Trägerelement 5c, das gemeinsam mit dem Tilgermassen-Trägerelement 5a einen Tilgermassenträger 3b bildet, während das Tilgermassen-Trägerelement 5a in einer zweiten Funktion zusammen mit einem Tilgermassen-Trägerelement 5b einen Tilgermassenträger 3a bildet. Die Tilgermassen 7a der Tilgermasseneinheit 8a sind somit ebenso wie die Tilgermassen 7b der Tilgermasseneinheit 8b axial zwischen jeweils zwei Tilgermassen-Trägerelementen aufgenommen. Dennoch ist aufgrund dieser Ausgestaltung die Anzahl an Tilgermassen-Trägerelementen 5a bis 5c um ein Tilgermassen-Trägerelement reduziert, wobei allerdings an dem axial mittigen Tilgermassen-Trägerelement 5a die doppelte Anzahl an Führungsbahnen 13 (vgl. Fig. 1) für nicht dargestellte Laufrollen der Tilgermassen 7a, 7b vorgesehen sind, als dies bei den axial endseitigen Tilgermassen-Trägerelementen 5b, 5c der Fall ist. Durch Anordnung der Tilgermassen 7a, 7b mit deutlichen Abstandsunterschieden R1, R2 zwischen dem jeweiligen mittleren Erstreckungsradius 36a, 36b gegenüber der Zentralachse 15 sind die Führungsbahnen allerdings mit Radialversatz zueinander angeordnet, wobei die Führungsbahnen für die Tilgermassen 7a in erheblich größerem Abstand gegenüber der Zentralachse 15 vorgesehen sind als die Führungsbahnen für die Tilgermassen 7b. Dadurch ist eine Schwächung des Tilgermassen-Trägerelementes 5a vermeidbar, das über seine Radialverlängerung 78 einerseits über die Verbindung 77 am Abtrieb 73 angreift, und andererseits zur Aufnahme des Turbinenrades 62 dient.

Zu diesem Torsionsschwingungsdämpfer 30 ist auszuführen, dass er einerseits durch die axiale Verschachtelung von Kupplungseinrichtung 64 und Dämpfungseinrichtung 70 und andererseits durch die axiale Aneinanderreihung beider Tilgermasseneinheiten 8a und 8b axialen Bauraum spart. Abweichend von den zuvor beschriebenen Ausführungen ist hier allerdings die antriebsseitige Dämpfungseinheit 68 radial innen angeordnet, die abtriebsseitige Dämpfungseinheit 69 dagegen radial außen.

### Bezugszeichen

- 1: Tilgersystem
- 3: Tilgermassenträger
- 5: Tilgermassen-Trägerelemente
- 7: Tilgermassen
- 8: Tilgermasseneinheit
- 11: Abstandsstücke
- 13: Führungsbahnen
- 14: Ausgangsbereich
- 15: Zentralachse
- 17: Anschlussbereiche
- 20: Rollkörper
- 22: Führungsbahn
- 24: Ausgangsbereich
- 25: Anschlussbereich
- 26: Kontaktbereich
- 27: Kontaktbereich
- 28: geometrische Anformung
- 30: Torsionsschwingungsdämpfer
- 31: Anschlag
- 32: ringförmiges Bauteil
- 33: Ringkörper
- 34: Halterung
- 35: Tilgermassenzentrum
- 36: mittlerer Erstreckungsradius
- 37: Bereichsmitte
- 38: Anschlagaufnehmer
- 40: Anschlagprofil
- 42: Umfangsseite
- 43: Anschlagseite
- 44: Tilgermassenelemente
- 54: Gehäuse
- 56: Kopplungsanordnung
- 60: hydrodynamischer Kreis
- 61: Pumpenrad
- 62: Turbinenrad
- 63: Leitrad
- 64: Kupplungseinrichtung
- 65: Kupplungskolben
- 66: Reibscheibenkupplung
- 67: Dämpfungseingang
- 68: antriebsseitige erste Dämpfungseinheit
- 69: abtriebsseitige zweite Dämpfungseinheit
- 70: Dämpfungseinrichtung
- 71: Nabe
- 72: Dämpfungsausgang
- 73: Abtrieb
- 74: Dämpfungszwischenteil
- 75: Anbindung
- 77: Verbindung
- 78: Radialverlängerung
- 79: Axialausdrückung
- 80: Verbindung
- 81: Abstandselemente
- 82: Kolbenträger
- 84: radial äußere Reibscheibenelemente
- 85: radial innere Reibscheibenelemente
- 86: Außenwandung des Gehäuses
- 87: radial innerer Reibscheiben-Elemententräger
- 88: radial äußerer Reibscheiben-Elemententräger
- 89: Deckel
- 90: hydrodynamischer Drehmomentwandler

## Patentansprüche

1. Torsionsschwingungsdämpfer (30) mit einem Tilgersystem (1) und mit einer Dämpfungseinrichtung (70), wobei das Tilgersystem (1) einen ersten Tilgermassenträger (3a) zur Aufnahme wenigstens einer ersten Tilgermasseneinheit (8a) mit zumindest einer Tilgermasse (7a) und einen zweiten Tilgermassenträger (3b) zur Aufnahme wenigstens einer zweiten Tilgermasseneinheit (8b) mit zumindest einer zweiten Tilgermasse (7b) aufweist, und die Dämpfungseinrichtung (70) zumindest über einen Dämpfungseingang (67) verfügt, der mit einer antriebsseitigen Dämpfungseinheit (68) in Wirkverbindung steht, und mit einer Kupplungseinrichtung (64), die mit einem Kupplungskolben (65) sowie mit einer Reibscheibenkupplung (66) ausgebildet ist, wobei radial äußere Reibscheibenelemente (84) der Reibscheibenkupplung (66) in Verzahnungseingriff mit einer Außenwandung (86) eines Gehäuses (54) und radial innere Reibscheibenelemente (85) der Reibscheibenkupplung (66) in Verzahnungseingriff mit einem Reibscheiben-Elemententräger (87) stehen, der an dem Dämpfungseingang (67) der Dämpfungseinrichtung (70) angreift, wobei zwischen der antriebsseitigen Dämpfungseinheit (68) und einer abtriebsseitigen Dämpfungseinheit (69) ein Dämpfungszwischenteil (74) wirksam ist, und die abtriebsseitige Dämpfungseinheit (69) mit einem Dämpfungsausgang (72) ausgebildet ist, der mit einem Abtrieb (73) verbunden ist, wobei die Tilgermassenträger (3a, 3b) wirkungsmäßig dem Dämpfungsausgang (72) zugeordnet sind, **dadurch gekennzeichnet, dass** die zumindest zwei Tilgermassenträger (3a, 3b) die denselben jeweils zugeordneten Tilgermasseneinheiten (8a, 8b) derart aufnehmen, dass die Tilgermassen (7a, 7b), bezogen auf ihren jeweiligen mittleren Erstreckungsradius (36a, 36b) bei Fahrbetrieb, über unterschiedliche Abstände (R1, R2; R2', R2") gegenüber einer Zentralachse (15) verfügen.

2. Torsionsschwingungsdämpfer (30) nach Anspruch 1, **dadurch gekennzeichnet, dass** die antriebsseitige Dämpfungseinheit (68) auf Teillast und die abtriebsseitige Dämpfungseinheit (69) auf Volllast abgestimmt ist.

3. Torsionsschwingungsdämpfer (30) nach Anspruch 1, **dadurch gekennzeichnet, dass** die antriebsseitige Dämpfungseinheit (68) auf Volllast und die abtriebsseitige Dämpfungseinheit (69) auf Teillast abgestimmt ist.

4. Torsionsschwingungsdämpfer (30) nach Anspruch 1, **dadurch gekennzeichnet, dass** die antriebsseitige Dämpfungseinheit (68) ebenso wie die abtriebsseitige Dämpfungseinheit (69) jeweils auf Volllast abgestimmt ist.

5. Torsionsschwingungsdämpfer (30) nach Anspruch 1, **dadurch gekennzeichnet, dass** wenigstens ein erster Tilgermassenträger (3a) axial zwischen der Dämpfungseinrichtung (70) und einem hydrodynamischen Kreis (60) einer Kopplungsanordnung (56) positioniert ist, und wenigstens ein zweiter Tilgermassenträger (3b) axial zwischen der Kupplungseinrichtung (64) der Kopplungsanordnung (56) und der Dämpfungseinrichtung (70).

6. Torsionsschwingungsdämpfer (30) nach Anspruch 1, **dadurch gekennzeichnet, dass** die zumindest zwei Tilgermasseneinheiten (8a, 8b) auf Anregungen eines Antriebs, wie einer Brennkraftmaschine, mit unterschiedlichen Ordnungen ausgelegt sind.

7. Torsionsschwingungsdämpfer (30) nach Anspruch 1, **dadurch gekennzeichnet, dass** die zumindest zwei Tilgermasseneinheiten (8a, 8b) auf Anregungen eines Antriebs, wie einer Brennkraftmaschine, mit zumindest im Wesentlichen gleichen Ordnungen ausgelegt sind.

8. Torsionsschwingungsdämpfer (30) nach Anspruch 1, **dadurch gekennzeichnet, dass** zumindest einer der Tilgermassenträger (3a, 3b) zwei mit Axialabstand zueinander angeordnete Tilgermassen-Trägerelemente (5a, 5b; 5c, 5d) aufweist, welche die jeweilige Tilgermasseneinheit (8a, 8b) axial zwischen sich aufnehmen.

9. Torsionsschwingungsdämpfer (30) nach Anspruch 8, **dadurch gekennzeichnet, dass** bei wenigstens einem der Tilgermassenträger (3a, 3b) jeweils eines der Tilgermassen-Trägerelemente (5a, 5b, 5c, 5d) über eine Verbindung (77, 80) gegenüber der Dämpfungseinrichtung (70) verfügt.

## Claims

1. Torsional vibration damper (30) having an absorber system (1) and having a damping device (70), the absorber system (1) having a first absorber mass carrier (3a) for receiving at least one first absorber mass unit (8a) with at least one absorber mass (7a) and a second absorber mass carrier (3b) for receiving at least one second absorber mass unit (8b) with at least one second absorber mass (7b), and the damping device (70) at least having a damping inlet (67) which is operatively connected to a drive-side damping unit (68), and having a clutch device (64) which is configured with a clutch piston (65) and with a friction disc clutch (66), radially outer friction disc elements (84) of the friction disc clutch (66) being in toothing engagement with an outer wall (86) of a housing (54) and radially inner friction disc elements (85) of the friction disc clutch (66) being in toothing engagement with a friction disc element carrier (87) which acts on the damping inlet (67) of the damping device (70), a damping intermediate part (74) being active between the drive-side damping unit (68) and an output-side damping unit (69), and the output-side damping unit (69) being configured with a damping outlet (72) which is connected to an output (73), the absorber mass carriers (3a, 3b) being operatively assigned to the damping outlet (72), **characterized in that** the at least two absorber mass carriers (3a, 3b) receive the absorber mass units (8a, 8b) respectively assigned thereto in such a way that the absorber masses (7a, 7b) are at different spacings (R1, R2; R2', R2") with respect to a central axis (15) in relation to their respective mean extent radius (36a, 36b) during driving operation.

2. Torsional vibration damper (30) according to Claim 1, **characterized in that** the drive-side damping unit (68) is tuned to part load and the output-side damping unit (69) is tuned to full load.

3. Torsional vibration damper (30) according to Claim 1, **characterized in that** the drive-side damping unit (68) is tuned to full load and the output-side damping unit (69) is tuned to part load.

4. Torsional vibration damper (30) according to Claim 1, **characterized in that** the drive-side damping unit (68) and the output-side damping unit (69) are tuned in each case to full load.

5. Torsional vibration damper (30) according to Claim 1, **characterized in that** at least one first absorber mass carrier (3a) is positioned axially between the damping device (70) and a hydrodynamic circuit (60) of a coupling arrangement (56), and at least one second absorber mass carrier (3b) is positioned axially between the clutch device (64) of the coupling arrangement (56) and the damping device (70).

6. Torsional vibration damper (30) according to Claim 1, **characterized in that** the at least two absorber mass units (8a, 8b) are designed with different orders in response to excitations of a drive, such as an internal combustion engine.

7. Torsional vibration damper (30) according to Claim 1, **characterized in that** the at least two absorber mass units (8a, 8b) are designed with at least substantially identical orders in response to excitations of a drive, such as an internal combustion engine.

8. Torsional vibration damper (30) according to Claim 1, **characterized in that** at least one of the absorber mass carriers (3a, 3b) has two absorber mass carrier elements (5a, 5b; 5c, 5d) which are arranged at an axial spacing from one another and receive the respective absorber mass unit (8a, 8b) axially between them.

9. Torsional vibration damper (30) according to Claim 8, **characterized in that**, in the case of at least one of the absorber mass carriers (3a, 3b), in each case one of the absorber mass carrier elements (5a, 5b, 5c, 5d) has a connection (77, 80) with respect to the damping device (70) .

## Revendications

1. Amortisseur d'oscillations de torsion (30) avec un système d'amortisseur (1) et avec un dispositif d'amortissement (70), dans lequel le système d'amortisseur (1) présente un premier support de masses d'amortissement (3a) destiné à recevoir au moins une première unité de masses d'amortissement (8a) avec au moins une masse d'amortissement (7a) et un deuxième support de masses d'amortissement (3b) destiné à recevoir au moins une deuxième unité de masses d'amortissement (8b) avec au moins une deuxième masse d'amortissement (7b), et le dispositif d'amortissement (70) présente au moins une entrée d'amortissement (67), qui est en liaison active avec une unité d'amortissement côté entraînement (68), et avec un dispositif d'embrayage (64) qui est formé avec un piston d'embrayage (65) ainsi qu'avec un embrayage à disques de friction (66), dans lequel des éléments de disque de friction radialement extérieurs (84) de l'embrayage à disques de friction (66) sont en prise d'engrènement avec une paroi extérieure (86) d'un boîtier (54) et des éléments de disque de friction radialement intérieurs (85) de l'embrayage à disques de friction (66) sont en prise d'engrènement avec un support d'élément de disque de friction (87) qui agit à l'entrée d'amortissement (67) du dispositif d'amortissement (70), dans lequel une partie intermédiaire d'amortissement (74) est active entre l'unité d'amortissement côté entraînement (68) et une unité d'amortissement côté sortie (69), et l'unité d'amortissement côté sortie (69) est formée avec une sortie d'amortissement (72), qui est reliée à une sortie (73), dans lequel les supports de masses d'amortissement (3a, 3b) sont associés activement avec la sortie d'amortissement (72), **caractérisé en ce que** les au moins deux supports de masses d'amortissement (3a, 3b) portent les unités de masses d'amortissement (8a, 8b) qui leur sont respectivement associées de telle manière que les masses d'amortissement (7a, 7b), rapportées à leur rayon d'extension moyen respectif (36a, 36b) en fonctionnement de roulage, présentent des distances différentes (R1, R2 ; R2', R2'') par rapport à un axe central (15).

2. Amortisseur d'oscillations de torsion (30) selon la revendication 1, **caractérisé en ce que** l'unité d'amortissement côté entraînement (68) est accordée sur une charge partielle et l'unité d'amortissement côté sortie (69) est accordée sur la pleine charge.

3. Amortisseur d'oscillations de torsion (30) selon la revendication 1, **caractérisé en ce que** l'unité d'amortissement côté entraînement (68) est accordée sur la pleine charge et l'unité d'amortissement côté sortie (69) est accordée sur une charge partielle.

4. Amortisseur d'oscillations de torsion (30) selon la revendication 1, **caractérisé en ce que** l'unité d'amortissement côté entraînement (68) ainsi que l'unité d'amortissement côté sortie (69) est accordée respectivement sur la pleine charge.

5. Amortisseur d'oscillations de torsion (30) selon la revendication 1, **caractérisé en ce qu'**au moins un premier support de masses d'amortissement (3a) est positionné axialement entre le dispositif d'amortissement (70) et un circuit hydrodynamique (60) du dispositif d'accouplement (56), et au moins un deuxième support de masses d'amortissement (3b) est positionné axialement entre le dispositif d'embrayage (64) du dispositif d'accouplement (56) et le dispositif d'amortissement (70) .

6. Amortisseur d'oscillations de torsion (30) selon la revendication 1, **caractérisé en ce que** lesdites au moins deux unités de masses d'amortissement (8a, 8b) sont conçues avec des ordres différents sur des excitations d'un entraînement, comme un moteur à combustion interne.

7. Amortisseur d'oscillations de torsion (30) selon la revendication 1, **caractérisé en ce que** lesdites au moins deux unités de masses d'amortissement (8a, 8b) sont conçues avec des ordres au moins essentiellement identiques sur des excitations d'un entraînement, comme un moteur à combustion interne.

8. Amortisseur d'oscillations de torsion (30) selon la revendication 1, **caractérisé en ce qu'**au moins un des supports de masses d'amortissement (3a, 3b) présente deux éléments de support de masses d'amortissement (5a, 5b; 5c, 5d) disposés à distance axiale l'un de l'autre, qui portent l'unité de masses d'amortissement (8a, 8b) respective axialement entre eux.

9. Amortisseur d'oscillations de torsion (30) selon la revendication 8, **caractérisé en ce que** pour au moins un des supports de masses d'amortissement (3a, 3b), chaque fois un des éléments de support de masses d'amortissement (5a, 5b, 5c, 5d) comporte une liaison (77, 80) par rapport au dispositif d'amortissement (70).
